# EUROPEAN PATENT SPECIFICATION

(11) **EP 2 406 732 B1**
(45) Date of publication and mention of the grant of the patent: **15.07.2015**
(21) Application number: 10715575.6
(22) Date of filing: 10.03.2010
(51) Int. Cl.: G06F 17/30

(54) **BOOKMARKING SYSTEM**
LESEZEICHEN-SYSTEM
SYSTÈME DE MISE EN SIGNET

(30) Priority: 10.03.2009 GB 0904113
(43) Date of publication of application: 18.01.2012
(73) Proprietor: Intrasonics S.à.r.l., 2540 Luxembourg (LU)
(72) Inventor: HOSKING, Ian Michael, Cambridge Cambridgeshire CB22 7GG (GB); LONG, Nicholas, James, Cambridge Cambridgeshire CB2 7GG (GB); SUTTON, Christopher, Cambridge Cambridgeshire CB22 7GG (GB)
(74) Representative: MacDougall, Alan John Shaw
(86) International application number: PCT/GB2010/050428
(87) International publication number: WO 2010/103325

(56) References cited:
- EP-A1- 1 821 225
- US-A1- 2002 183 059
- US-A1- 2003 021 441
- US-A1- 2007 150 930

## Description

The present invention relates to a system and method of bookmarking audio and/or video content for sharing with other users. The invention has particular relevance to the bookmarking of audio content and the subsequent analysis of such bookmarks for audience and market research purposes.

The dream of quick and easy access to information goes back way before the advent of the World Wide Web (WWW). Vannevar Bush wrote his visionary article "As We May Think" in The Atlantic Monthly back in 1945. This described a conceptual machine called the Memex. Although it was mechanical in nature and used microfilm it did describe many of the features that we associate with the WWW today such as the linking and combining of pages.

"As We May Think" was a key influence of Ted Nelson who coined the terms "Hypertext" and "Hypermedia" in 1965 and Douglas Englebart who invented the mouse and demonstrated this and a revolutionary computer collaboration system on the 9^{th} of December 1968. The system known as NLS (oN-Line System) included a practical implementation of hypertext links and features as advanced as video conferencing. By the end of the 1980's the World Wide Web emerged from the work of Tim Berners-Lee through projects such as ENQUIRE. The WWW has grown further into Web 2.0 with the emergence of social media, social networking, and folksonomies.

An important element of social networking is the sharing of information amongst users in a network. People have found it valuable to tell what they do and what they like. There is a growing desire amongst social networkers to share their views on a wider number of topics and on all types of media.

Much of the dream of Vannevar Bush has been realised. For example a single mouse click can bookmark a web page, this can be tagged and shared with other users through various social networking services such as delicious (www.delicious.com). However, it is very hard to bookmark audio and video content in the same way as web pages. The problem is further compounded when the video and audio is being consumed (watched or listened) via a broadcast TV or radio network and there is only a simple remote control interface and often no Internet connection.

US-A-2003/021441 discloses a method and system to link an audio signal to metadata or actions. The audio signal may include plural-bit data encoded in the form of a digital watermark. The audio signal is received from a user's device, and the embedded digital watermark is decoded to obtain the plural-bit data, and/or an identifier is dynamically derived from the audio signal by computing a fingerprint of the audio signal. A set of data is identified with the plural-bit data, and then the fingerprint identifier is mapped to specific data within the set of data, and at least a portion of the specific data is returned to the user's device.

This invention concerns bringing the simplicity of bookmarking that is available for web pages to video and audio content.

The invention also concerns the subsequent analysis of the bookmarks for audience surveying and market research purposes. In particular, many existing audience surveying systems currently measure the "exposure" of the user to the television or radio programme. They do not actually know if the user is really watching or listening to the broadcast programme. However, with the bookmarks that are generated by the present invention, it becomes possible to obtain real measures of the "engagement" of the user with the broadcast content - as the user is clearly "engaged" with the content as he/she is bookmarking it for subsequent viewing and/or sharing with other users. The reader is referred to the paper entitled "Measures of Engagement", by Joe Plummer et al, 30 March 2007 which describes the differences between "exposure" and "engagement" and some ways for measuring engagement.

According to one aspect, the present invention provides a bookmarking system comprising a user device, a disambiguation module and a social networking server, wherein the user device comprises a bookmarking module operable: i) to receive a user initiated input indicating a desire to bookmark a segment of a media programme that is being played by a play out module; ii) to obtain data relating to acoustic signals captured from a microphone coupled to the user device; and iii) to send the data relating to the acoustic signals to the disambiguation module; and wherein the disambiguation module is operable: i) to process data relating to the acoustic signals captured by the user device, to identify the segment of the media programme the user desires to bookmark and to identify timing information indicating a start and end of the segment within the media programme; and ii) to generate bookmark data for the segment of the media programme including a content identifier which identifies the media programme containing the segment to be bookmarked and the timing information indicating the start and end of the segment within the media programme to allow the segment of the media programme to be played back as opposed to the whole programme; and wherein the generated bookmark is published on the social networking server for sharing the bookmarked content with other users.

In one embodiment, the disambiguation module processes the data relating to acoustic signals to generate user options and outputs the user options to the user device, and wherein the user device outputs the user options to the user for selection by the user. The user device then sends a user selection option back to the disambiguation module for use in disambiguating the identity of the media segment to be bookmarked.

In a preferred embodiment, the bookmarking module operates independently of the play but module that is playing the media content. This allows the system to be able to operate with any future or legacy play out module or device. The play out module will typically be provided on a separate device from the user device, such as a television or radio receiver.

In one embodiment, the user device processes the captured acoustic signals to extract one or more codes embedded within the acoustic signal; and wherein the data that is sent to the disambiguation server includes the code(s). The or each code typically comprises a channel identifier and a time code and the disambiguation module uses the channel identifier and the time code to disambiguate the content and identify the segment of media content to be bookmarked.

In an alternative embodiment, the data sent by the user device comprises samples of the acoustic signal and the system further comprises a fingerprint module that compares the samples of the acoustic signal captured by the user device with stored audio models of known media content and outputs data to the disambiguation module identifying media content that may match the acoustic signals captured by the user device. The disambiguation module then uses the this data to identify the content to be bookmarked.

The system also allows the user to input data relating to the segment of content to be bookmarked for inclusion in the bookmark. The user input may comprise one or more of: a text, audio or visual annotation.

Typically, the disambiguation module will generate a link (such as a URL) ora content identifier (such as a PID generated by the media producer that created the content) for inclusion in the bookmark, to allow the user or other users to subsequently access the bookmarked content. The disambiguation module may also determine start and end points for the content segment to be bookmarked, for inclusion in the bookmark. Thus, in general terms, the disambiguation module disambiguates the identity and desired start and end points of the content for which a bookmark is desired, using limited metadata decoded or derived from the acoustic signal captured by the user device.

The bookmark itself can be generated by the disambiguation module or by the user device from the data supplied by the disambiguation server.

The disambiguation module may be provided in the user device or in at least one remote server to which the user device can connect via a communications network.

The invention also provides a user device comprising: a user interface; a microphone; and
a bookmarking module operable: i) to receive a user initiated input indicating a desire to bookmark a segment of a media programme that is being played by a play out module; ii) to obtain data relating to acoustic signals captured from the microphone; and iii) to send the data relating to the acoustic signals to a disambiguation module; and iv) to publish bookmark data generated by the disambiguation module on a social networking server for sharing the bookmarked content with other users, wherein the bookmark data comprises a content identifier which identifies the media programme containing the segment to be bookmarked and timing information indicating a start and end of the segment within the media programme to allow the segment of the media programme to be played back as opposed to the whole programme.

The invention also provides a disambiguation module for disambiguating content to be bookmarked by a user, the disambiguation module being operable: i) to process data relating to acoustic signals captured by a user device, to identify a segment of a media programme the user desires to bookmark and to identify timing information indicating a start and end of the segment within the media programme; ii) to generate bookmark data for the segment of the media programme including a content identifier which identifies the media programme containing the segment to be bookmarked and the timing information indicating the start and end of the segment within the media programme to allow the segment of the media programme to be played back as opposed to the whole programme; and iii) to publish the bookmark data on a social networking server for sharing the bookmarked content with other users.

The invention also provides a bookmarking method comprising: using a bookmarking module of a user device: i) to receive a user initiated input indicating a desire to bookmark a segment of a media programme that is being played by a play out module; ii) to obtain data relating to acoustic signals captured from a microphone coupled to the user device; and iii) to send the data relating to the acoustic signals to a disambiguation module; and at the disambiguation module: i) processing data relating to the acoustic signals captured by the user device, to identify the segment of the media programme the user desires to bookmark and to identify timing information indicating a start and end of the segment within the media programme; and ii) generating bookmark data for the segment of the media programme including a content identifier which identifies the media programme containing the segment to be bookmarked and the timing information indicating the start and end of the segment within the media programme to allow the segment of the media programme to be played back as opposed to the whole programme; and publishing the generated bookmark data on a social networking server for sharing the bookmarked content with other users.

Analysis of the bookmarks thus generated by many different users provides a rich source of audience survey or media research data that provides a clear indication of users' engagement with content rather than the normal research measures that measure user exposure to the content.

The modules used in the present invention may be hardware modules or they may be software modules. They may also be a mix of hardware or software modules. Where software modules are provided, a computer readable medium or other software product may be provided currying code to cause a programmable device to become configured as the user device, the disambiguation module or the analysis module described above. Corresponding methods are also provided.

Some beneficial aspects of the preferred embodiments include:
1) allowing the bookmarking of content with a time base independently of the type of playback device on which the content is being played;
2) Combination of limited metadata decoded or derived from the audio of the content with other metadata sources to disambiguate (resolve) the identity of the content and the start and end point of interest;
3) the use of multiple disambiguation methods, and various combinations of these to disambiguate the content identity and the desired start and end points;
4) iterative resolution over time as more metadata becomes available, including user input to improve the accuracy;
5) the aggregation of bookmarks from different users to provide additional data to assist with disambiguation or to provide recommendations for an EPG;
6) the ability to set edit markers and produce compilations of clips;
7) the ability to add additional data to the bookmark including caption data;
8) the ability to use aggregated bookmarking data to conduct market research or media research into users interest in media content;
9) the ability to download bookmark clips to media playback devices such as STBs to allow easy access to the clips for subsequent playback;
10) the ability to bookmark references within the content itself.

These and other various aspects and features of the invention will become clear from the following detailed description of exemplary embodiments that are described with reference to the accompanying drawings in which:
Figure 1 is a schematic overview of a mobile communication system embodying the present invention;
Figure 2 is a block diagram illustrating the main elements of a cellular telephone forming part of the system shown in Figure 1;
Figure 3 is a block diagram illustrating the main components of a disambiguation server forming part of the system shown in Figure 1;
Figure 4 is a schematic overview of another mobile communication system embodying the present invention.

### Overview

The video & audio bookmarking system of this example is designed:
- For ease of use - aiming for the simplicity of bookmarking a web page.
- For mobility - unlike web pages, audio and video content is consumed in a variety of ways, many of which are not by sitting in front of a computer.
- To be broadcast compatible - although audio and video content is being consumed more and more through the Internet there is still a wide spread use of broadcast networks.
- To provide accurate identification of the content - all audio and video content has an inherent time base. For example a programme may be 30 minutes in duration. The user may want to bookmark the whole programme or only a segment of it. There may be a particular part of the programme that is of interest and the user only wants to bookmark this. It is therefore desirable not only to identify accurately the content but also the start and end time of interest to the user.
- To integrate easily - any system should integrate as much as possible with existing infrastructure, including the use of social networking sites, to enable sharing of bookmarks.
- To allow for the easy retrieval of the bookmark - bookmarks should be easy to retrieve, this includes the start and end time of the content, particularly in the case where a segment has been marked, and preferably also a link to the content. Easy retrieval should also include use via social networking sites.

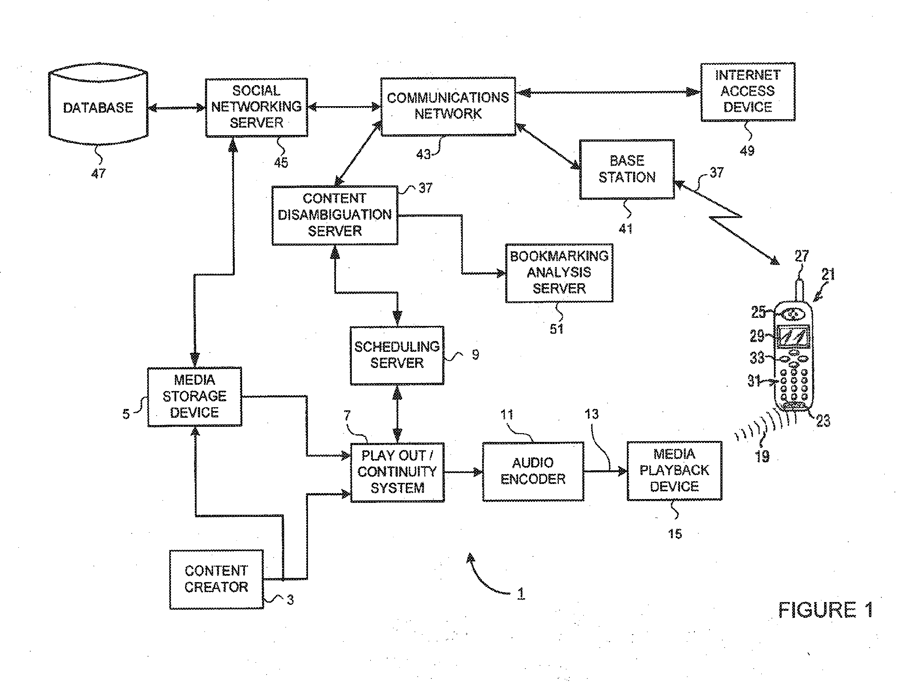

Figure 1 outlines the audio and video bookmarking system 1 that is provided in this embodiment to allow a user to bookmark video and/or audio segments for subsequent use and sharing. Initially, audio and/or video content is created by a content creator 3, such as a television camera or a radio microphone etc. The content creator 3 may output the content immediately as soon as it is captured, for example for live broadcasts; or the content creator 3 may process and edit the content before the content is ready to be broadcast or otherwise distributed to the end user. The content thus created will typically be stored on a media storage device 5 for later play out. In addition content can also be played out live via the play out/continuity system 7. The play out/continuity system 7 is driven by a scheduling server 9 that synchronises the play out timing of the different content on the available channels.

An audio encoder 11 is provided in the play out chain, which inserts or embeds data into the audio stream. Such encoding systems are currently used for tasks such as audience monitoring (see for example WO02/45273, the content of which is incorporated herein by reference). In the case of audience monitoring, the data inserted into the audio by the encoder 11 typically includes a channel identifier and some form of time code. Other data can be inserted such as a unique identifier for the content itself, for example to identify a music track or advert. The encoding performed by the encoder 11 is typically performed in such a way that the embedded data is unobtrusive to the end user when the audio is played out as an acoustic (sound) signal. Techniques for doing this are well established (see for example WO02/45286 or WO2009/144470, the contents of which are incorporated herein by reference).

The content stream is then distributed 13 to a user playback device 15. The distribution can occur by a variety of means including terrestrial and satellite broadcast, cable, and internet and even media such as DVDs and CDs. This system can work on any form of distribution due to the data being embedded in the audio.

It should also be noted that the audio encoding (performed by the encoder 11) can occur elsewhere in the distribution chain, for example locally to the user in, for example, the user's Set Top Box (not shown). This also gives the potential to encode additional useful data relevant to that locality, for example where geographically the user is located. This allows a "where were you" element to the bookmark.

The content is then played back to the user via a standard playback device 15, such as a TV, radio, computer, multi-room distribution system and personal and portable computing devices. The play back device 15 will typically include a display sub-system (where the content includes video) and an audio sub-system (not shown) including one or more speakers. One of the advantages of this embodiment is its ability to work regardless of the specific creation 3, storage 5, play out 7, distribution 13 and play back 15 systems used.

The data that is inserted in the content's audio will be present in the acoustic signal 19 output by the play back device 15. This acoustic signal 19 is received by the user's mobile (cellular) telephone 21 via the microphone 23 and can be decoded by a decoder (not shown) in the telephone 21. The way in which the telephone 21 decodes and recovers the inserted data is well understood (see for example WO02/45273) and so will not be described in further detail here. The use of the mobile telephone 21 addresses the problem of content being consumed in a variety of contexts including broadcast media. When the user hears or sees something they wish to bookmark, the user can then use the user interface of the mobile telephone 21 to request a bookmark for that content. In particular, when the user wishes to bookmark a particular piece of content, they press a button on the keypad 31. This causes the decoder (not shown) to decode the data that is embedded within the audio. This embedded data, together with other information, such as information input by the user identifying why they are bookmarking the content, may be sufficient to act as a bookmark for the audio/video content and allow the subsequent retrieval of the content.

However, in most situations the data that is inserted into the audio by the encoder 11 will not be sufficient to accurately identify the content for later retrieval; and even if the content can be identified accurately, it is still preferable to specify the start and end times of the content segment that the user wants to bookmark. There is therefore a need, in most situations, to disambiguate what specific piece of content is being bookmarked. This is achieved, in this embodiment, using a content disambiguation server 37. In particular, the user's mobile telephone 21 connects to the content disambiguation server 37 over an RF wireless link 39 to a base station 41 and a communications network 43 (which will typically include part of the Internet and/or the user's cellular telephone operator network). The user's mobile telephone 21 passes the data it has extracted from the acoustic signal 19 (and any other user input and other relevant information) to the content disambiguation server 37. The server 37 uses the received data to search scheduling information stored on the scheduling server 9. If the available information is not sufficient to resolve the ambiguities, then the disambiguation server 37 may send prompts to the user's mobile telephone 21 requesting additional information. Typically these prompts will be output to the user via the display 29. Once the user has responded to the prompts and the disambiguation server 37 has the information required to disambiguate the content, the server 37 sends the information uniquely identifying the content to the user's mobile telephone 21. The user's telephone 21 can then store the information itself for use later in controlling the retrieval of the content or the user's telephone 21 can use the information to generate the desired bookmark for the content. The bookmark can then be shared with other users by publishing (making available) the bookmark on, for example, a social networking website run by a social networking server 45. The social networking server 45 may also retrieve the content from the media storage device 5 for local storage within its database 47, so that the content is readily accessible to other users of the social networking site.

Once the bookmark has been created, it can be edited by the user via their mobile telephone 21 or via a separate internet access device 49 (such as a personal computer or the like). The user may edit the bookmark to include additional information, such as comments or captions; or to refine the bookmark so that it more accurately points to the desired content.

A bookmarking analysis server 51 is also provided in this embodiment, to analyse the bookmarks generated by different users. The analysis server 51 obtains the bookmarking information from the disambiguation server 37 (although it can also obtain the bookmarking information from the social networking server 45). The bookmark information generated by users is particularly useful for market research purposes as it highlights content that different users were interested in or "engaged" with - sufficiently so to create a bookmark. This information is more valuable than the normal audience survey information that only identifies if the user has been "exposed" to the content - as the user may not be actually watching or listening to the content at the time that it is being played out.

### Mobile Telephone

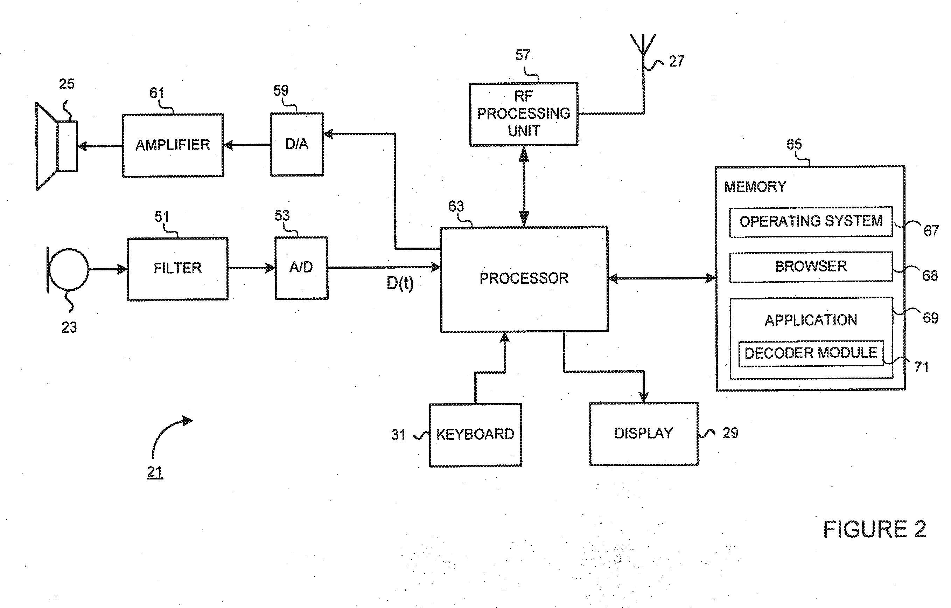

Figure 2 illustrates the main components of the cellular telephone 21 used in this embodiment. As shown, the cellular telephone 21 includes a microphone 23 for receiving acoustic signals and for converting them into electrical equivalent signals. These electrical signals are then filtered by the filter 51 to remove unwanted frequencies typically outside the frequency band of 300Hz to 3.4kHz. The filtered audio is then digitised by an analogue to digital converter 53, which samples the filtered audio, typically at a sampling frequency of 8kHz, representing each sample typically by a 13 to 16 bit digital value. The stream of digitised audio (D(t)) is then input to a processor 55, which compresses the audio during a voice call and outputs the compressed audio to an RF processing unit 57 which modulates the compressed audio onto one or more RF carrier signals for transmission to the base station 35 via the antenna 27. Similarly, compressed audio signals received via the antenna 27 are fed to the RF processing unit 57, which demodulates the received RF signals to recover the compressed audio data from the RF carrier signal(s), which are then passed to the processor 55. The processor 55 then decodes the compressed audio data to regenerate the audio samples represented thereby, which are output to the loudspeaker 25 via the digital to analogue converter 59 and the amplifier 61.

The operation of the processor 55 is controlled by software stored in memory 65. The software includes operating system software 67 (for controlling the general operation of the cellular telephone 21), a browser 68 for accessing the internet and application software 69 for providing additional functionality to the cellular telephone 21. In this embodiment, the application software 69 is configured to cause the cellular telephone 21 to generate bookmarks for the audio or video content being played by the play out device 15 in the manner discussed above.

### Disambiguation Server

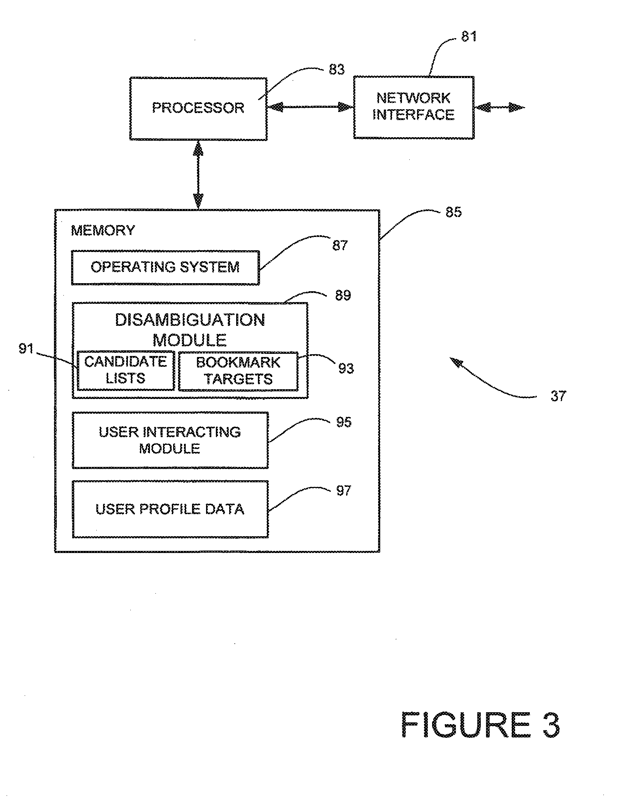

Figure 3 is a block diagram illustrating the main components of the disambiguation server 37 used in this embodiment. As shown, the disambiguation server 37 includes a network interface 81 via which the disambiguation server 37 can communicate with the user telephone 21, the scheduling server 9 and the bookmarking analysis server 51. The disambiguation server 37 also includes a processor 83 that is controlled by software stored in memory 85. As shown, the software includes an operating system 87; an disambiguation module 89 that includes candidate lists 91 and bookmark targets 93; and a user interacting module 95. The memory also stores other data such as user profile data 97 that can be used to help in the disambiguation process.

### Operation

The operation of the bookmarking system is best understood from an example of how the system will generate a bookmark for the user.

Initially, the user may be watching a programme being broadcast by the BBC on a television play out device 15 and at some point during the broadcast, they see something that is of interest, so they press a button on their mobile telephone 21. This causes the application software 69 to be launched and it immediately starts looking for data embedded in the acoustic signals 19 that are being received by the microphone 23. This embedded data should identify at least the channel that the user is watching and a time code corresponding to when the content was broadcast. However, there is still ambiguity about what the user wanted to bookmark (the 'Bookmark Target').

To resolve this ambiguity, the application software 69 communicates with the disambiguation server 37. Depending on the implementation, this may be a simple 'directory lookup' service (mapping channel and time code to a Content Identifier for the corresponding content), or the disambiguation server 37 may be using a more sophisticated algorithm for disambiguation. Depending on the implementation, this algorithm may involve prompting the user to provide more information to clarify what they intended to bookmark.

In the following example, it will be assumed that the disambiguation server 37 will perform the disambiguation with some user interaction. Other implementations might use different procedure steps, or alternatively be a rule-based, inference-based, or other type of algorithm, and could support a range of channels from different broadcasters.

The disambiguation server 37 in this example uses available information and a procedure to generate a 'Candidate List' 91 of items the user may have wanted to bookmark, and uses a procedure and additional information from user interaction to narrow down the candidate list 91 to produce the final bookmark target 93. Each item in the candidate list 91 has an assigned Type, which is used to guide the user interaction, and a start time and an end time.

### Example Disambiguation Process

The disambiguation server 37 initially receives the channel and time information from user's mobile telephone 21. In response, the disambiguation server 37 initialises the candidate list 91 to be empty. The disambiguation server 37 then tries to populate the candidate list 91 using the BBC's scheduling information (which is available as structured XML data) from the BBC's scheduling server 9.

The disambiguation server 37 uses the channel and time code information received from the mobile telephone 21 to construct a URL to access the XML data stored in the scheduling server 9. For example, if the channel information is 'BBC One / London' and the time code is '22^{nd} February 2010 at 18:01', then the disambiguation server 37 constructs the following URL:
http://www.bbc.co.uk/bbcone/programmes/schedules/london/2010/02/22.xml

The particular structure of the URL generated will be specific to the scheduling server being addressed and will be known in advance by the disambiguation server 37.

The XML data returned for this URL has a number of <broadcast> elements, one for each programme scheduled for broadcast on the identified channel during the whole day. Each element has a <start> and <end> child element specifying the programme's scheduled broadcast time, and further child elements describing the episode, the series and the brand. The <episode> element has a unique identifier element <pid> which the disambiguation server uses as the Content Identifier for this broadcast item.

In this example, the time code information indicated that the content being watched was broadcast at 18.01, so the disambiguation server processes the received XML data to identify the content broadcast at 18.01. In this case, the Content Identifier is set to 'bbc_pid:b00r0zfn', for the programme titled 'BBC News at Six'. The disambiguation server 37 then adds this Content Identifier to the candidate list 91 with Type 'Episode'.

In this embodiment, if the user's button-press was within 5 minutes of the start or end of the programme's scheduled timeslot, then the disambiguation server 37 also extracts Content Identifiers for the previous or next programme, as appropriate, from the schedule XML already retrieved. This helps disambiguate in the case where the user presses the button near the start or end of a TV programme. They might want to bookmark the current programme, or the next programme (to watch later, perhaps), or the previous programme (which they were late in bookmarking).

In this example, the disambiguation server 37 retrieves the Content Identifier 'b006mgvw' for the programme ending at 17:59, titled 'Weakest Link' and adds it to the candidate list 91.

The disambiguation server 37 may also consider a user profile held for the user in the user profile data 97, to identify other possible candidates to include in the candidate list 91. For example, the user profile data 97 might define past and current behaviour of the user that can be used to identify other possible candidates. For example, the user profile data 97 might indicate that this user frequently bookmarks the same program on different days. (The disambiguation server 37 can identify the specific user from user ID information (that may include the user's telephone number) included in the initial bookmarking request sent from the user's mobile telephone 21). Therefore, the disambiguation server 37 may also retrieve the schedule XML for the previous day or the next day to obtain information for corresponding programmes on other days. The disambiguation server 37 then adds these extra Content Identifiers to the Candidate List with Type 'Episode'.

The disambiguation server 37 also uses additional data sources to generate additional candidates. For example, the disambiguation server 37 may look up timing information about the segments of a TV programme it has added to the candidate list 91 and their constituent scenes to derive broadcast times for each scene. The broadcast server 37 may then identify the three most recent scenes before the user's button-press and add these scenes to the Candidate List 91 with Type 'Scene'. In general this information is only available for live programmes or those produced 'in-house'. In this example, the BBC's production schedule would have segment-by-segment information for 'BBC News at Six'. The disambiguation server 37 would contact the BBC's media play out system 7 using the Media Object Server (MOS) protocol to request metadata about the programme, and receive back structured XML data including unique identifiers and start/end times for each programme segment.

The disambiguation server 37 would also contact the scheduling server 9 to request information about any adverts or programme trailers broadcast in the gap between programmes. If there were any adverts or trailers, then the disambiguation server 37 adds any adverts or trailers which were shown in the five minutes preceding the user's button-press, to the candidate list with Type 'Advert'. Although the BBC does not air commercial advertisements, it does show promotional adverts between programmes. In this example, there may have been adverts shown between the 'Weakest Link' and the 'BBC News at Six', which would be added to the candidate list 91.

Additionally or alternatively, the disambiguation server 37 may request transmission log information from the servers of the BBC's broadcast partner, Red Bee Media. This transmission log constitutes the 'as-run' schedule, and the information received back would specify all media items broadcast between these two programmes, including adverts, and would provide the unique identifier and start/end times for each.

The unique identifiers are used to construct Content Identifiers (see note below), and these are combined with the start/stop times provided to add the new items to the candidate list 91. When constructing Content Identifiers, some care must be taken to ensure they are unique across the bookmarking system. The allocation of 'PID' values as used by the BBC is controlled by the BBC, and so it can be assumed that any PID is a unique identifier for BBC content. When these are mixed with identifiers from the media play out system 7 and from the Scheduling Server, some additional step is required to ensure uniqueness across all Content Identifiers, such as prefixing all Content Identifiers with their source (e.g. 'bbc_pid:', 'redbee_id:', 'bbc_playout_id:' in our example).

Once the disambiguation server 37 has generated the candidate list 91, it initiates interaction with the user via their mobile telephone 21 so that the user can select from the candidate list 91 or at least narrow down the possibilities. To do this in this embodiment, the disambiguation server 37 sends information about the Types present in the candidate list to the user's mobile telephone 21, to be presented to the user as a choice. In this example, the disambiguation server 37 sends structured data (e.g. XML data) to the application software 69 which analyses the structured data and outputs a choice to the user (for example via the display 29) of 'Episode', 'Scene', or 'Advert'. The mobile telephone 21 may also allow the user to manually specify a time range for their bookmark instead of choosing from the candidate list 91. Once the user has made a selection or manually specified a time range, the mobile telephone 21 will return the user's input to the disambiguation server 37. The disambiguation server 37 receives the user's input and if the user had input a start and end time, then the disambiguation server 37 will use the start and end time to disambiguate the content as far as possible. If the user chose a Type from the list, then the disambiguation server 37 sends the mobile telephone 21 structured data describing the items from the Candidate List which match the user's chosen Type, to be presented to the user. In response to receiving this further information, the mobile telephone 21 will present the user with the option to choose one of the displayed items, or indicate that none of the displayed items are the item the user wishes to bookmark. The mobile telephone 21 again returns the further input received from the user back to the disambiguation server 37.

If the user indicates that none of the entries in the candidate list 91 that are presented to the user is the correct content to be bookmarked, then the user device 21 may prompt the user to enter additional information. This additional information might include a title (e.g. 'Boston Legal 22^{nd} February', 'Flora Advert', 'Funny scene with elephant'), metadata tags (e.g. 'advert', 'funny', 'Denny Crane'), or other descriptive information. The disambiguation server 37 can then use this additional information to try to disambiguate the content to be bookmarked.

In addition the disambiguation server 37 can infer the content's identity and the timing from a statistical analysis of previous and real-time behavioural information of other users. For example if a significant number of people bookmark a programme at a particular point in time then this has probably been triggered by a particular element of the programme and so the disambiguation server 37 can infer that the user wants to bookmark a segment as opposed to the whole programme. For example if a blooper (error) occurs it is likely that people want to bookmark this segment of the programme. This may require further analysis or manual refinement by the broadcaster or other parties to accurately specify the start and end time.

As mentioned above, the user is able.to augment the start and end time and content identifier information determined by the disambiguation server. The additional information may include:
- Tags e.g. 'News', 'Blooper', 'Interview'
- Comments e.g. 'This is a great interview'
- Annotation e.g. 'Note the person in the background': Here the text can also include a specification of which part/area of the image it should be associated with.
- Captured Image e.g. of a person in the background of the video content
- Ratings e.g. the user can give a rating for example 4 out of 5.
- Sharing e.g. the user can specify who else can see the user's bookmarks.

For the annotation case, the user interface of the mobile telephone 21 can include an input mechanism for selecting where on the image the annotation should be. For example there could be a set of 4 zones and the user could select the upper right zone via the user interface of the mobile telephone 21.

A built-in camera on the mobile telephone 21 could be used to specify a region of interest and/or provide an image or audio file to be attached to the bookmark. For example, the user could photograph the video screen (including the region of interest) and can then specify the whole or just part of the captured image as being of interest using the user interface on the mobile telephone 21; or the user may enter a spoken description via the microphone 23 identifying the reason for the bookmark which can then be appended to the bookmark.

Any extra information attached to the bookmarks could also be automatically analysed by the disambiguation server 37 (optionally in conjunction with the media content) to infer further information about the bookmark; for example, to determine that multiple users have specified the same region of interest, even if their captured images or specified regions differ.

Once the Bookmark Target has been disambiguated as far as possible, the disambiguation server 37 uses a selection of the available information about the Bookmark Target to create the user's bookmark. In descending order of specificity, the classes of information which might be available are:
1) A unique identifier. In the case of an Episode, this would be the Content Identifier derived from the BBC's PID information. In the cases of Scenes and Adverts, the Content Identifiers would be derived from information provided by the source which generated those candidates (e.g. the BBC's play out servers).
2) The channel, start time and end time. Note this is more specific than the Channel and Time information originally submitted by the mobile telephone 21.
3) The Channel and Time information received from the mobile telephone 21.
4) Descriptive metadata provided by user. For example a title or tags or an explanation for why they are bookmarking the programme or segment.

It can be seen that a rich and accurate bookmark can thus be produced. The bookmark can be stored in the disambiguation server 37 or on the mobile telephone 21. The bookmark is also ideal for sharing. Sharing can occur via a variety of mechanisms such as e-mail or text messages, but it is particularly well suited to a range of social networks such as Facebook (www.facebook.com), Delicious (www.delicious.com) and Twitter (www.twitter.com). This is shown in Figure 1, where the content disambiguation server 37 or the user's mobile telephone 21 can publish the bookmark on a social networking server 45. The disambiguation server 37 could use the log-in details for the user's social network account, provided by the user, to make the process as seamless as possible. This means that the content disambiguation server 37 will have an account for each user in order to securely hold their user account data in their user profile data 97.

### Bookmarking Analysis

The user's behaviour and aggregation of the behaviour of multiple users is potentially a rich source of information to enhance the disambiguation process as well as providing valuable information about viewing and listening habits. For example it is possible to see what content is bookmarked and the number of users who bookmarked that content. This information can be augmented with other information such as user ratings and demographic information that could be captured as part of the sign-up process for those using the system. The aggregated data therefore provides a powerful market research database that is analysed by the bookmarking analysis server 51 to extend the understanding of what people watched or listened to, to include their level of interest and opinions. The analysis server 51 may receive conventional audience survey data as well and use both sources of information to identify more accurate audience survey information that identifies content with which users are truly engaged.

### Modifications and Alternatives

A detailed embodiment has been described above. As those skilled in the art will appreciate, a number of modifications and alternatives can be made to the above embodiment whilst still benefiting from the inventions embodied therein.

In the above embodiment, the disambiguation server 37 interacted with the user via their mobile telephone 21, in order to disambiguate the content to be bookmarked. In an alternative embodiment, the user can decide to interact with the disambiguation server 37 at a later time - for example using their home computer via wired internet connection.

In the above embodiment, the disambiguation server 37 was provided in the network. In an alternative embodiment, the functionality of the disambiguation server may be provided by the user's mobile telephone 21 or by the user's other internet device (such as their personal computer).

In the above embodiment, the user's mobile telephone 21 sent the channel and time code data extracted from the acoustic signal received by the mobile telephone 21. In an alterative embodiment, the mobile telephone 21 may send additional information as well as the channel and time code. For example, if location information is available (such as from a GPS decoder or from cell ID data), then the location information may be provided as well. This location information can be used to determine any regional variation in the programme content. For example the data extracted may show that Channel 1 is being watched but with the location information it is possible to infer that this may be from a particular region. This configuration is useful in situations where a channel may show local news specific to a broadcast region.

In the above example, the disambiguation server was able to determine the start and end time for a piece of content to be bookmarked. There are a number of ways that the start and end time can be specified. These include but are not limited to:
- The whole programme. The timings can be taken from the schedule information if needed for playback.
- Manual specification by the user. This can be performed via the user interface of the user's mobile telephone. The time may be specified in a multitude of ways including but not limited to:
   - Actual times e.g. 22:10 to 22:15 (in this case the time of the mobile telephone's clock can be referenced to the broadcast time by comparing the mobile telephone's time that it receives a time code against the known time that the time code was broadcast).
   - Estimated duration e.g. 3 minutes before I initiated the bookmark to 5 minutes after.
   - The start point and end point may be derived from the point the user initiates the bookmark (start) and a subsequent input via the user interface to determine the end point.
   - A combination of these or other input methods.
- Identification of a programme segment from the scheduling information. For example a breakdown of the programme's content may be available e.g. the interview is scheduled for 22:09 to 22:14. Again where complete resolution is not possible a range of segments can be presented to the user for selection of the correct segment.

Where a bookmark has been saved it is possible to update the details of the bookmark at a later date. For example if a large number of people have bookmarked a specific part, the start and end time can be manually refined (for example via the content disambiguation server 37) and then updates sent to the users. A variety of other mechanisms can be applied for updating the bookmark. For example the user's bookmark may reference a server that contains common bookmarks. This means the update can occur centrally. This function could be part of the content disambiguation server 37 or hosted on a different server.

The shared bookmarks can be accessed by an Internet access device 49, such as a personal computer. The bookmarks can then be followed to allow playback of the video or audio either from the social networking server's database 47 or from the media storage device 5. The timing information provided in the bookmark means that a specific segment of a longer programme can be played back as opposed to the whole programme. A variety of other play back models could also be used, for example the bookmarked content may be downloaded to a Personal Video Recorder (PVR) or mobile device. There is also the possibility of charging for the bookmarked clips, for example on a pay per play or lifetime purchase basis.

In the above embodiment, the system relies on the user's device recovering data that is embedded in the sound of the content being played. An alternative, and potentially complementary approach, works using audio fingerprinting. Audio fingerprinting is a well established technique for identifying content. For example Shazam (www.shazam.com) is an example of a commercial system that allows users to identify music tracks. The basis of such systems is a database of audio fingerprints for known tracks. A fingerprint of the content the user is listening to is created either in the handset or at a remote server that captures the audio via a voice channel. This captured fingerprint is then compared with those in the database in an attempt to identify the track.

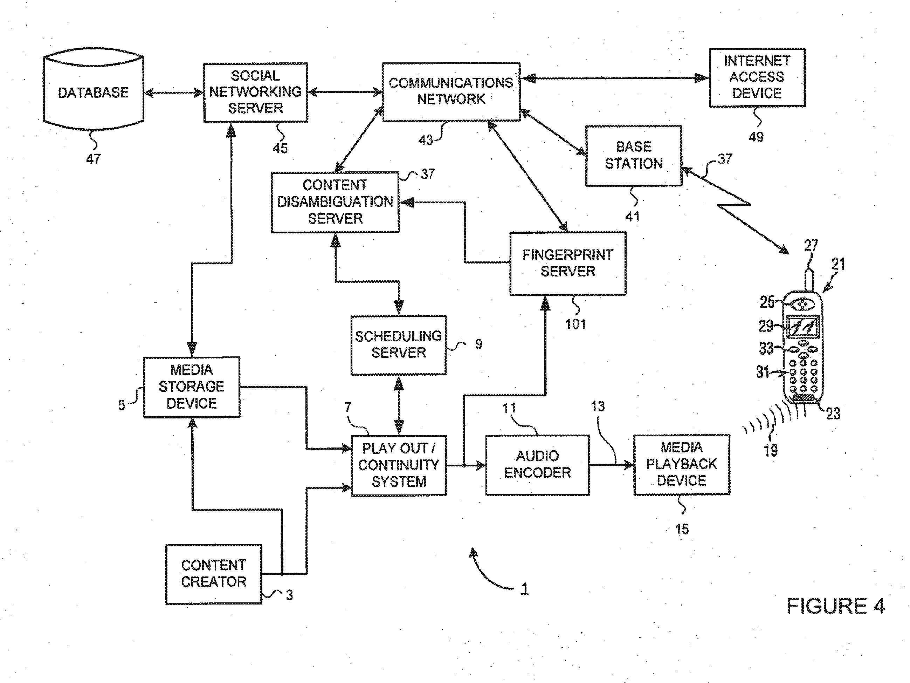

The use of such a fingerprinting approach is illustrated in Figure 4. A feed from the play out system 7 goes into the fingerprint server 101. This generates fingerprints for the feed with an associated channel ID and date & time stamp. For a multi-channel service the server 101 would take multiple simultaneous feeds from different channels.

In this embodiment, the user's mobile telephone 21 generates a fingerprint using a software application running locally (on the mobile telephone 21). This fingerprint is then sent to the fingerprint server 101 which compares the fingerprint against its database (which if the content is being broadcast will be constantly updated to record the broadcast content). When one or more matches are found, the fingerprint server passes the channel ID and date and time associated with each match to the content disambiguation server 37, which then disambiguates the content as per the first embodiment described above.

Alternatively the user's mobile telephone 21 can set up a voice channel with the fingerprint server 101 (either directly or via the internet) and the fingerprint server 101 can then capture the audio and generate the fingerprint for matching against its database of fingerprints. This means that any user communications device with voice capability and even fixed line phones can work with the system.

It should be noted that there is no reason why the embedded data embodiment and the fingerprinting embodiment cannot work in parallel. An application on the mobile telephone 21 can either operate in an embedded data extraction mode or a fingerprinting mode or simultaneously act as a decoder while generating fingerprints.

The information obtained by the bookmarking analysis server 51 can be used not only for audience survey information, but also to suggest content to the user that they may wish to listen to or watch. For example, the user may keep bookmarking a particular programme or programme type (such as a science fiction series). The analysis server 51 or even the bookmarking server 37 can process the bookmarks generated by a user and the bookmarks generated by other users and on the basis of the analysis make recommendations about other content that the user may want to listen to or watch. This can be taken further to the creation of a "social EPG". The social EPG works by aggregating usage and bookmark information to create a personal EPG on the basis of what content others are interested in. Key information that can be collected includes, but is not limited to:
- What I am going to watch
- What I am watching
- What I actually watched
- What I bookmarked
- What I compiled
- What I like (preferences)

In such an embodiment, information such as what I am watching, what I am going to watch and what I have watched can be aggregated by a recommendations engine from data obtained from the playback devices 15, such as Set Top Boxes. Combining this with what users actively bookmark, rate and compile enables a rich understanding of what users have enjoyed and are likely to enjoy. Where this data is shared via a social networking website, it is possible to restrict recommendations to those from people you either know or who are defined as 'like-minded' based on the profile of their media consumption and other profile information. A personalised EPG can then be generated by the recommendation engine and presented to the user via the playout device 15 or even their mobile telephone 21.

It is not unusual for audio and video content to refer to other content. For example a TV programme may give details of a website where more information can be found. With this invention it is possible to determine that the user's bookmarking request may be driven by the desire to bookmark the reference (e.g. the website) rather than the programme itself. In such an embodiment, a reference server may be provided that gathers data and metadata from the programme content. For example a web address (URL) that is associated with a particular part (time) of the programme. When the user initiates a bookmark the content disambiguation server 37 can check the reference server for any references associated with the programme. These references can then be presented as bookmarking options to the user on the display of the user's mobile telephone 21. The user can then choose to bookmark the content or one of the references within it.

Reference information may already be available in digital form for some media content. For example, podcasts normally have associated 'show notes' published alongside the podcasts themselves. This text information often includes web links to the items discussed in the podcast, usually in the order discussed. It may also specify when in the podcast's time base the reference is made. Such sources of information may be accessed and optionally aggregated by the Reference Server to be presented to the user when they indicate that they wish to bookmark a reference.

It is possible to reduce the number of reference options presented to the user by restricting the time band in which references are searched for. For example only references made within the preceding 5 minutes from the time of bookmarking are presented. The user can also be presented with the option at searching for references from earlier within the programme. It is also possible to restrict the number of options by having an upper limit on the number displayed. For example display the last four references made.

The approach described above is particularly useful for providing links relevant to advertisements. For example where there is a 4 minute advertising break, which may contain eight 30 second adverts, the user can be presented with a list from which they can select the advert which is of interest to them.

One of the issues of bookmarking audio and video content is handling the fact it has a time base. This is addressed in the embodiments described above by being able not only to identify the content, but also where in the time base the playback is. Effectively the user's mobile telephone 21 can be synchronised to the media play back device 15. This means that the user's mobile telephone 21 can set edit markers while the content is being consumed. A specific example of this general principle is as follows:
- The user is listening to the radio.
- The audio decoder in the user's mobile telephone 21 is switched on and receiving the audio.
- The audio decoder receives the embedded content ID and time data. The application then sets a timer running based on the time received. Effectively it is now synchronised to the media play back device 15.
- The user hears something they are interested in and uses the user interface of their mobile telephone 21 to set a start point.
- When the item of interest finishes the user uses the user interface again to set the end point.
- This can be repeated for other items of interest and can work across different channels and media sources.

The nature of real time setting of Edit Markers means that they will need refining. This is also true of the basic bookmarking process described above. There are a number of ways of doing this. These include but are not limited to:
- Manual adjustment by the user via the user interface of their mobile telephone 21.
- Automatic adjustment by the user's mobile telephone 21 based on:
   - User settings e.g. subtract 30 seconds from the user specified start point;
   - Statistical analysis e.g. on average people set the start point so many seconds late;
   - The content schedule e.g. the edit marker start point is near the start point of a particular item on the schedule;
- Post capture refinement where the edit markers are forwarded to a user's account held on an edit and compilation server. The user can then access these via the Internet access device 49 to refine the edit markers. This can be done by reviewing the content which is available via the social networking Server.

This ability to easily set edit markers lends itself to users creating their own compilations of audio and/or video clips (podcasts and vodcasts). This may, for example, be 'my favourite' clips from today put together in a compilation that others can listen to or watch.

It should be noted that where a time code is not embedded in the audio, it can be determined using the user's mobile telephone's in-built clock or via reference to the scheduling server 9. This alternative is particularly well suited to the fingerprinting approach outlined in Figure 4. Here fingerprints from the user's mobile telephone 21 can be checked against those generated and time stamped by the Fingerprint Server 101 from the Play out/Continuity system 7 to determine the point in time of the playback. This will handle scenarios where the content is time shifted by referencing the original time. It is also possible to determine the amount the playback has been time shifted.

As discussed above, various different data may be added to the bookmark. One of the sources of metadata that can be added is captions (e.g. the subtitles of spoken words). The addition of captions to the bookmark has a number of potential uses, including:
- This enables a rich description of the content with a low memory/bandwidth overhead compared to the content itself.
- The captions can be used for refining the start and end points for the clip. For example the user can review the caption text either via their mobile telephone 21 or another Internet access device 49. The user can select the caption that represents the start and similarly for the end point. As the captions are synchronised with the content, selecting the start and end caption allows the user device or the disambiguation server to derive more accurate start and end points for the bookmark.
- The caption text can also be cross referenced with the schedule to determine any differences between the play out and the original schedule.

If captions are not available then it would be possible to produce the captions using a voice recognition engine. For example the disambiguation server or some other network server could include a voice recognition engine and take a feed for the play out and generate time stamped captions.

The ability to pause content during playback has been extended to live broadcasts through the use of Personal Video Recorders (PVRs). With the bookmarking system described herein, it is possible to extend this functionality further by allowing the user to bookmark the moment they want to stop watching the live broadcast and then continue watching on another play back device 15 either immediately or at a later date. This is particularly useful if the user wants to carry on viewing/listening at another location or on another device.

In the above embodiments, the bookmarking application responded to the user pressing a button or the like on the mobile telephone to start processing acoustic signals received from the microphone to decode data embedded within the acoustic signals. As those skilled in the art will appreciate, a separate decoding module may already be running for a different application (for example an audience survey module that reports all the codes that are detected) in order to recover the codes embedded in the acoustic signal 19. In this case, the when the user presses the button or otherwise indicates his desire to make a bookmark, the bookmarking module will obtain the next decoded data from the decoder module and then pass this to the disambiguation server as before. It is also not necessary that the decoder module is separate from the bookmarking module. For example, the decoding functionality may form part of an existing audience surveying module that is arranged to capture codes for audience surveying purposes and the bookmarking module is added as an additional component of the audience surveying module.

In the above embodiment, the bookmarking module sent data to the disambiguation server when the user pressed the button on the telephone indicating that they wish to bookmark a segment of content. The bookmarking module then acted as an interface between the user and the disambiguation server, providing user options received from the disambiguation server to the user for selection; and providing the user selected option to the disambiguation server. In an alternative embodiment, once the initial data has been provided to the disambiguation server by the bookmarking module, the subsequent user interaction can be controlled by a different module. For example, when the disambiguation server wishes to interact with the user, it may send an instruction to the user's telephone causing it to open a web portal to the disambiguation server. The disambiguation server would then interact through the web portal directly with the user.

In the above embodiments, the user initiated the bookmarking operation by pressing a key on their mobile telephone. In response the mobile telephone decoded codes from an acoustic signal or it captured the audio and sent then sent the decoded codes or the captured audio to a remote server for processing. In an alternative embodiment, the user's device may just decode the codes or capture the audio and then store them until a remote server requests the codes or content from the user device. In this way, the server "pulls" the information required to make the bookmark rather than the information be "pushed" to the server for processing.

In the above embodiment, the bookmarks were principally generated to share with other users. As those skilled in the art will appreciate, the bookmarks can be kept private if desired. They can also be used to mark a point within the original content from which the user wishes to resume watching or listening to the content. In this case, the bookmark will typically be stored on the user's device.

In the systems described above, the content disambiguation server obtained schedule data by querying third party scheduling systems. Where such third party scheduling systems are not available an alternative disambiguation server could build its own schedule database by connecting to media streams and storing the content metadata along with channel and time. Possible stream sources include: RTSP, MMS, DAB Text, RDS, Teletext, MHEG, OpenTV, etc.

In the above embodiments, a mobile telephone was described as the user device used to generate the bookmark on its own or in combination with the disambiguation server. As those skilled in the art will appreciate, other user devices could be used provided they have a microphone to capture the acoustic signal and a network connection to allow them to connect to other devices and the disambiguation server in particular. The user device is also preferably a portable device that the user can take with them. A mobile (cellular) telephone is ideally suited to the task, but other portable devices, such as PDAs, portable media players or laptop computers could be used instead.

In the above embodiments, a number of software modules and software applications were described. As those skilled in the art will appreciate, the software modules or applications may be provided in compiled or un-compiled form and may be supplied as a signal over a computer network, or on a recording medium. Further, the functionality performed by part or all of this software may be performed using one or more dedicated hardware circuits. However, the use of software modules is preferred as it facilitates the updating of the computer system. Additionally, the functionality of one or more of the software modules or applications described above may be combined into a single module, embedded in the operating system or split into a number of different modules if desired. Likewise the functionality of some or all of the various servers discussed above may be performed by a single server or may be performed by a number of different servers. Multiple servers may also be provided that provide the same functionality, for example for load balancing purposes.

In the above embodiment, the user's mobile telephone connected with the base station via an RF wireless link. In other embodiments, other wireless or even wired links may be used. For example, a wireless optical link may be used to connect the user device with the base station.

In the above embodiments, the user device was arranged to capture an acoustic signal (using its microphone) and then send metadata decoded or derived from the acoustic signal to the disambiguation server for identifying the content and start and end points for the content. In an alternative system, the metadata may be embedded within the video part of the content. In this case, the a camera on the user's device can capture the video played out by the play out device and decode the metadata, which it can then forward to the disambiguation server as before. Alternatively, the captured video may be sent to a fingerprint server, where possible matches for the content can be determined and then passed to the disambiguation server.

In the above embodiment, the user device was provided separately from the play out device. In an alternative embodiment, the user device and the play out device may be the same device. For example, many cellular telephones have an in-built radio receiver module and in the future many will have a television receiver module. Typically, these radio receiver modules or television receiver modules will have basic functionality and the bookmarking system of the present invention could be provided to operate in parallel with (and independently of) them to pick up the acoustic signal or the video signal output by these radio/television modules and then operate in the same manner as described above.

Various other modifications will be apparent to those skilled in the art and will not be described in further detail here.

## Claims

1. A bookmarking system comprising a user device (21), a disambiguation module (89) and a social networking server (45),
wherein the user device (21) comprises a bookmarking module (69) operable: i) to receive a user initiated input indicating a desire to bookmark a segment of a media programme that is being played by a play out module (15); ii) to obtain data relating to acoustic signals captured from a microphone (23) coupled to the user device (21); and iii) to send the data relating to the acoustic signals to the disambiguation module (89); and
wherein the disambiguation module (89) is operable: i) to process data relating to the acoustic signals captured by the user device (21), to identify the segment of the media programme the user desires to bookmark and to identify timing information indicating a start and end of the segment within the media programme; and ii) to generate bookmark data for the segment of the media programme including a content identifier which identifies the media programme containing the segment to be bookmarked and the timing information indicating the start and end of the segment within the media programme to allow the segment of the media programme to be played back as opposed to the whole programme; and
wherein the generated bookmark is published on the social networking server (45) for sharing the bookmarked content with other users.

2. A bookmarking method comprising:
using a bookmarking module (69) of a user device (21): i) to receive a user initiated, input indicating a desire to bookmark a segment of a media programme that is being played by a play out module (15); ii) to obtain data relating to acoustic signals captured from a microphone (23) coupled to the user device (21); and iii) to send the data relating to the acoustic signals to a disambiguation module (89); and
at the disambiguation module (89): i) processing data relating to the acoustic signals captured by the user device (21), to identify the segment of the media programme the user desires to bookmark and to identify timing information indicating a start and end of the segment within the media programme; and ii) generating bookmark data for the segment of the media programme including a content identifier which identifies the media programme containing the segment to be bookmarked and the timing information indicating the start and end of the segment within the media programme to allow the segment of the media programme to be played back as opposed to the whole programme; and
publishing the generated bookmark data on a social networking server (45) for sharing the bookmarked content with other users.

3. A method according to claim 2, further comprising, at the disambiguation module (89) processing the data relating to acoustic signals to generate user options and outputting the user options to the user device (21), and at the user device (21), outputting the user options to the user for selection by the user and preferably further comprising sending a user selection of a user option back to the disambiguation module (89) and, at the disambiguation module (89), using the selected option to disambiguate the identity of the media segment to be bookmarked.

4. A method according to claim 2 or 3, comprising using the user device (21) to process the captured acoustic signals to extract a code embedded within the acoustic signal; and wherein the data relating to the acoustic signals comprises the extracted code, and preferably wherein the code includes a channel identifier and a time code and wherein the method comprises, at the disambiguation module (89), using the channel identifier and the time code to disambiguate and identify the segment of the media programme to be bookmarked and identify timing information indicating the start and end of the segment within the media programme.

5. A method according to claim 2 or 3, wherein the data relating to the acoustic signal comprises samples of the acoustic signal, and further comprising using a fingerprint module (101) to compare the samples of the acoustic signal captured by the user device with stored audio models of known media content and to output data to the disambiguation module identifying media content that may match the acoustic signals captured by the user device.

6. A method according to any of claims 2 to 5, further comprising receiving at the user device (21), user input relating to the segment of content to be bookmarked for inclusion in the bookmark, and preferably wherein the user input comprises one or more of: a text, audio or visual annotation and wherein the bookmark includes the user input annotation.

7. A user device (21) comprising:
a user interface (29, 31);
a microphone (23); and
a bookmarking module (69) operable: i) to receive a user initiated input indicating a desire to bookmark a segment of a media programme that is being played by a play out module (15); ii) to obtain data relating to acoustic signals captured from the microphone (23); and iii) to send the data relating to the acoustic signals to a disambiguation module (89); and iv) to publish bookmark data generated by the disambiguation module (89) on a social networking server (45) for sharing the bookmarked content with other users, wherein the bookmark data comprises a content identifier which identifies the media programme containing the segment to be bookmarked and timing information indicating a start and end of the segment within the media programme to allow the segment of the media programme to be played back as opposed to the whole programme.

8. A user device according to claim 7, operable to output user options generated by the disambiguation module (89) to the user for selection by the user and preferably wherein the user device (21) is operable to send a user selection of a user option to the disambiguation module (89) for use in disambiguating the identity of the media segment to be bookmarked.

9. A user device according to claim 7 or 8, operable to process the captured acoustic signals to extract a code embedded within the acoustic signal; and wherein the data relating to the acoustic signals comprises the extracted code and preferably wherein the code includes a channel identifier and a time code; or wherein the data relating to the acoustic signal comprises samples of the acoustic signal.

10. A user device according to any of claims 7 to 9, wherein the bookmarking module (69) is operable to receive user input relating to the media segment to be bookmarked for inclusion in the bookmark, and preferably wherein the user input comprises one or more of: a text, audio or visual annotation and wherein the bookmark includes the user input annotation.

11. A disambiguation module (89) for disambiguating content to be bookmarked by a user, the disambiguation module (89) being operable: i) to process data relating to acoustic signals captured by a user device, to identify a segment of a media programme the user desires to bookmark and to identify timing information indicating a start and end of the segment within the media programme; ii) to generate bookmark data for the segment of the media programme including a content identifier which identifies the media programme containing the segment to be bookmarked and the timing information indicating the start and end of the segment within the media programme to allow the segment of the media programme to be played back as opposed to the whole programme; and iii) to publish the bookmark data on a social networking server (45) for sharing the bookmarked content with other users.

12. A module according to claim 11, wherein the disambiguation module (89) is operable to process the data relating to acoustic signals to generate user options and is operable to output the user options to the user device.

13. A module according to claim 12, operable to receive a user selection of a user option from the user device (21) and to use the selected option to disambiguate the identity of the audio segment to be bookmarked

14. A computer implementable instructions product comprising computer implementable instructions for causing a programmable computer device to become configured as the user device of any of claims 7 to 10 or to become configured as the disambiguation module of any of claims 11 to 13.

## Patentansprüche

1. Lesezeichensetzsystem, das ein Benutzergerät (21), ein Unterscheidungsmodul (89) und einen Sozialvernetzungsserver (45) umfasst,
wobei das Benutzergerät (21) ein Lesezeichensetzmodul (69) umfasst, das für Folgendes dient: i) Empfangen einer benutzerinitiierten Eingabe, die einen Wunsch anzeigt, ein Segment eines Medienprogramms, das von einem Wiedergabemodul (15) wiedergegeben wird, mit einem Lesezeichen zu versehen; ii) Erhalten von Daten, die akustische Signale betreffen, die von einem Mikrophon (23) erfasst wurden, das mit dem Benutzergerät (21) gekoppelt ist; und iii) Senden der Daten, die die akustischen Signale betreffen, zu dem Unterscheidungsmodul (89); und
wobei das Unterscheidungsmodul (89) für Folgendes dient: i) Verarbeiten von Daten, die akustische Signale betreffen, die von dem Benutzergerät (21) erfasst wurden, um das Segment des Medienprogramms zu identifizieren, das der Benutzer mit einem Lesezeichen versehen möchte, und um Zeitinformationen zu identifizieren, die einen Anfang und ein Ende des Segments innerhalb des Medienprogramms anzeigen; und ii) um Lesezeichendaten für das Segment des Medienprogramms zu erzeugen, das eine Inhaltskennung umfasst, die das Medienprogramm identifiziert, das Folgendes umfasst: das Segment, das mit einem Lesezeichen versehen werden soll, und die Zeitinformationen, die den Anfang und das Ende des Segments innerhalb des Medienprogramms anzeigen, damit das Segment des Medienprogramms und nicht das gesamte Programm wiedergegeben werden kann; und
wobei das erzeugte Lesezeichen auf dem Sozialvernetzungsserver (45) veröffentlicht wird, um die mit dem Lesezeichen versehenen Inhalte mit anderen Benutzern zu teilen.

2. Lesezeichensetzverfahren, das Folgendes umfasst:
Verwenden eines Lesezeichensetzmoduls (69) eines Benutzergeräts (21) für Folgendes: i) Empfangen einer benutzerinitiierten Eingabe, die einen Wunsch anzeigt, ein Segment eines Medienprogramms, das von einem Wiedergabemodul (15) wiedergegeben wird, mit einem Lesezeichen zu versehen; ii) Erhalten von Daten, die akustische Signale betreffen, die von einem Mikrophon (23) erfasst wurden, das mit dem Benutzergerät (21) gekoppelt ist; und iii) Senden der Daten, die die akustischen Signale betreffen, zu einem Unterscheidungsmodul (89); und
am Unterscheidungsmodul (89): i) Verarbeiten von Daten, die akustische Signale betreffen, die von dem Benutzergerät (21) erfasst wurden, um das Segment des Medienprogramms zu identifizieren, das der Benutzer mit einem Lesezeichen versehen möchte, und um Zeitinformationen zu identifizieren, die einen Anfang und ein Ende des Segments innerhalb des Medienprogramms anzeigen; und ii) um Lesezeichendaten für das Segment des Medienprogramms zu erzeugen, das eine Inhaltskennung umfasst, die Folgendes identifiziert: das Medienprogramm, das das Segment enthält, das mit einem Lesezeichen versehen werden soll, und die Zeitinformation, die den Anfang und das Ende des Segments innerhalb des Medienprogramms anzeigen, damit das Segment des Medienprogramms und nicht das gesamte Programm wiedergegeben werden kann; und
Veröffentlichen der Daten des erzeugten Lesezeichens auf einem Sozialvernetzungsserver (45), um die mit dem Lesezeichen versehenen Inhalte mit anderen Benutzern zu teilen.

3. Verfahren nach Anspruch 2, das am Unterscheidungsmodul (89) ferner Folgendes umfasst:
Verarbeiten der Daten, die akustische Signale betreffen, um Benutzeroptionen zu erzeugen, und Ausgeben der Benutzeroptionen an das Benutzergerät (21), und an dem Benutzergerät (21), Ausgeben der Benutzeroptionen an den Benutzer zur Auswahl durch den Benutzer und wobei das Verfahren vorzugsweise ferner Folgendes umfasst: Senden einer Benutzerauswahl einer Benutzeroption zurück zu dem Unterscheidungsmodul (89) und, am Unterscheidungsmodul (89), Verwenden der ausgewählten Option zur Unterscheidung der Identität des Mediensegments, das mit einem Lesezeichen versehen werden soll.

4. Verfahren nach Anspruch 2 oder 3, das das Verwenden des Benutzergeräts (21) zur Verarbeitung der erfassten akustischen Signale umfasst, um einen Code zu extrahieren, der in dem akustischen Signal eingebettet ist; und wobei die Daten, die die akustischen Signalen betreffen, den extrahierten Code umfassen, und vorzugsweise wobei der Code eine Kanalkennung und einen Zeitcode umfasst und wobei das Verfahren an dem Unterscheidungsmodul (89) die Verwendung der Kanalkennung und des Zeitcodes umfasst, um das Segment des Medienprogramms, das mit einem Lesezeichen versehen werden soll, zu unterscheiden und zu identifizieren und die Zeitinformationen zu identifizieren, die den Anfang und das Ende des Segments innerhalb des Medienprogramms anzeigen.

5. Verfahren nach Anspruch 2 oder 3, wobei die Daten, die das akustische Signal betreffen, Proben des akustischen Signals umfassen, und wobei das Verfahren ferner ein Fingerabdruckmodul (101) für Folgendes umfasst:
Vergleichen der Proben des akustischen Signals, die von dem Benutzergerät erfasst wurden, mit gespeicherten Audiomodellen von bekannten Medieninhalten und Ausgeben der Daten an das Unterscheidungsmodul, das Medieninhalte identifiziert, die den akustischen Signale entsprechen, die von dem Benutzergerät erfasst wurden.

6. Verfahren nach einem der Ansprüche 2 bis 5, das an dem Benutzergerät (21) ferner das Empfangen einer Benutzereingabe umfasst, die das Inhaltssegment betrifft, das zur Aufnahme in eine Lesezeichenliste mit einem Lesezeichen versehen werden soll, und vorzugsweise wobei die Benutzereingabe eines oder mehrere von Folgendem umfasst: einen Text-, Audio- oder visuellen Vermerk und wobei das Lesezeichen den Benutzereingabevermerk umfasst.

7. Benutzergerät (21), das Folgendes umfasst:
eine Benutzerschnittstelle (29, 31);
ein Mikrofon (23); und
ein Lesezeichensetzmodul (69), das für Folgendes dient: i) Empfangen einer benutzerinitiierten Eingabe, die einen Wunsch anzeigt, ein Segment eines Medienprogramms, das von einem Wiedergabemodul (15) wiedergegeben wird, mit einem Lesezeichen zu versehen; ii) Erhalten von Daten, die akustische Signale betreffen, die von dem Mikrophon (23) erfasst wurden, iii) Senden der Daten, die die akustischen Signale betreffen, zu einem Unterscheidungsmodul (89); und iv) Veröffentlichen der Lesezeichendaten, die von dem Unterscheidungsmodul (89) erzeugt wurden, auf einem Sozialvernetzungsserver (45), um die mit dem Lesezeichen versehenen Inhalte mit anderen Benutzern zu teilen, wobei die Lesezeichendaten eine Inhaltskennung umfassen, die Folgendes identifiziert: das Medienprogramm, das das Segment umfasst, das mit einem Lesezeichen versehen werden soll, und die Zeitinformationen, die einen Anfang und ein Ende des Segments innerhalb des Medienprogramms anzeigen, damit das Segment des Medienprogramms und nicht das gesamte Programm wiedergegeben werden kann.

8. Benutzergerät nach Anspruch 7, das Benutzeroptionen, die von dem Unterscheidungsmodul (89) erzeugt wurden, an den Benutzer zur Auswahl durch den Benutzer ausgeben kann und vorzugsweise wobei das Benutzergerät (21) eine Benutzerauswahl einer Benutzeroption zu dem Unterscheidungsmodul (89) zur Verwendung bei der Unterscheidung der Identität des Mediensegments, das mit einem Lesezeichen versehen werden soll, senden kann.

9. Benutzergerät nach Anspruch 7 oder 8, das die erfassten akustischen Signale verarbeiten kann, um einen Code zu extrahieren, der in dem akustischen Signal eingebettet ist; und wobei die Daten, die die akustischen Signalen betreffen, den extrahierten Code umfassen, und vorzugsweise wobei der Code eine Kanalkennung und einen Zeitcode umfasst oder wobei die Daten, die das akustische Signal betreffen, Proben des akustischen Signals umfassen.

10. Benutzergerät nach einem der Ansprüche 7 bis 9, wobei das Lesezeichensetzmodul (69) Benutzereingaben empfangen kann, die das Mediensegment betreffen, das zur Aufnahme in die Lesezeichenliste mit einem Lesezeichen versehen werden soll, und vorzugsweise wobei die Benutzereingabe eines oder mehrere von Folgendem umfasst:
einen Text-, Audio- oder visuellen Vermerk und wobei das Lesezeichen den Benutzereingabevermerk umfasst.

11. Unterscheidungsmodul (89) zum Unterscheiden von Inhalten, die von einem Benutzer mit einem Lesezeichen versehen werden sollen, wobei das Unterscheidungsmodul (89) für Folgendes dient: i) Verarbeiten von Daten, die akustische Signale betreffen, die von einem Benutzergerät erfasst wurden, um ein Segment eines Medienprogramms zu identifizieren, das der Benutzer mit einem Lesezeichen versehen möchte, und die Zeitinformationen zu identifizieren, die einen Anfang und ein Ende des Segments innerhalb des Medienprogramms anzeigen; ii) Erzeugen von Lesezeichendaten für das Segment des Medienprogramms, das eine Inhaltskennung umfasst, die Folgendes identifiziert:
das Medienprogramm, das das Segment umfasst, das mit einem Lesezeichen versehen werden soll, und die Zeitinformationen, die den Anfang und das Ende des Segments innerhalb des Medienprogramms anzeigen, damit das Segment des Medienprogramms und nicht das gesamte Programm wiedergegeben werden kann; und iii) Veröffentlichen der Lesezeichendaten auf einem Sozialvernetzungsserver (45), um die mit dem Lesezeichen versehenen Inhalte mit anderen Benutzern zu teilen.

12. Modul nach Anspruch 11, wobei das Unterscheidungsmodul (89) für Folgendes dient: Verarbeiten der Daten, die akustische Signale betreffen, um Benutzeroptionen zu erzeugen, und Ausgeben der Benutzeroptionen an das Benutzergerät.

13. Modul nach Anspruch 12, das eine Benutzerauswahl einer Benutzeroption von dem Benutzergerät (21) empfangen und die ausgewählte Option verwenden kann, um die Identität des Audiosegments zu unterscheiden, das mit einem Lesezeichen versehen werden soll.

14. Computerimplementierbares Anweisungsprodukt, das computerimplementierbare Anweisungen umfasst, um eine programmierbare Computervorrichtung zu veranlassen, als Benutzergerät nach einem der Ansprüche 7 bis 10 konfiguriert zu werden oder als Unterscheidungsmodul nach einem der Ansprüche 11 bis 13 konfiguriert zu werden.

## Revendications

1. Système de mise en signet comprenant un dispositif d'utilisateur (21), un module de désambiguïsation (89) et un serveur de réseautage social (45),
le dispositif d'utilisateur (21) comprenant un module de mise en signet (69) exploitable de façon à : i) recevoir une saisie amorcée par l'utilisateur indiquant un souhait de mettre en signet un segment d'un programme de médias qui est en train d'être lu par un module de lecture (15) ; ii) obtenir des données relatives à des signaux acoustiques capturés à partir d'un microphone (23) couplé au dispositif d'utilisateur (21) ; et iii) envoyer au module de désambiguïsation (89) les données relatives aux signaux acoustiques ; et
le module de désambiguïsation (89) étant exploitable de façon à : i) traiter des données relatives aux signaux acoustiques capturés par le dispositif d'utilisateur (21), pour identifier le segment du programme de médias que l'utilisateur souhaite mettre en signet, et identifier des informations horaires indiquant un début et une fin du segment au sein du programme de médias ; et ii) générer des données de signet pour le segment du programme de médias incluant un identifiant de contenu lequel identifie le programme de médias contenant le segment destiné à être mis en signet et les informations horaires indiquant le début et la fin du segment au sein du programme de médias pour permettre la reproduction du segment du programme de médias par opposition au programme tout entier ; et
le signet généré étant publié sur le serveur de réseautage social (45) afin de partager le contenu mis en signet avec d'autres utilisateurs.

2. Procédé de mise en signet, comprenant les opérations consistant à :
utiliser un module de mise en signets (69) d'un dispositif d'utilisateur (21) : i) pour recevoir une saisie amorcée par l'utilisateur indiquant un souhait de mettre en signet un segment d'un programme de médias qui est en train d'être lu par un module de lecture (15) ; ii) pour obtenir des données relatives à des signaux acoustiques capturés à partir d'un microphone (23) couplé au dispositif d'utilisateur (21) ; et iii) envoyer à un module de désambiguisation (89) les données relatives aux signaux acoustiques ; et
au niveau du module de désambiguïsation (89), les opérations consistant à : i) traiter des données relatives aux signaux acoustiques capturés par le dispositif d'utilisateur (21), pour identifier le segment du programme de médias que l'utilisateur souhaite mettre en signet, et identifier des informations horaires indiquant un début et une fin du segment au sein du programme de médias ; et ii) générer des données de signet pour le segment du programme de médias incluant un identifiant de contenu lequel identifie le programme de médias contenant le segment destiné à être mis en signet et les informations horaires indiquant le début et la fin du segment au sein du programme de médias pour permettre la reproduction du segment du programme de médias par opposition au programme tout entier ; et
publier, sur un serveur de réseautage social (45), les données de signet ayant été générées afin de partager le contenu mis en signet avec d'autres utilisateurs.

3. Procédé selon la revendication 2, comprenant en outre, au niveau du module de désambiguïsation (89), les opérations consistant à traiter les données relatives aux signaux acoustiques afin de générer des options d'utilisateur, et présenter les options d'utilisateur au dispositif d'utilisateur (21), et au niveau du dispositif d'utilisateur (21), présenter à l'utilisateur les options d'utilisateur en vue d'une sélection par l'utilisateur, et en outre de préférence comprenant l'envoi d'une sélection d'utilisateur d'une option d'utilisateur en retour vers le module de désambiguïsation (89) et, au niveau du module de désambiguïsation (89), utiliser l'option sélectionnée pour désambiguïser l'identité du segment de médias destiné à être mis en signet.

4. Procédé selon la revendication 2 ou 3, comprenant l'utilisation du dispositif d'utilisateur (21) pour traiter les signaux acoustiques capturés afin d'extraire un code qui est intégré au sein du signal acoustique ; et les données relatives aux signaux acoustiques comprenant le code extrait et de préférence le code incluant un identifiant de canal et un code horaire, et cas dans lequel le procédé comprend, au niveau du module de désambiguïsation (89), l'utilisation de l'identifiant de canal et du code horaire pour désambiguïser et identifier le segment du programme de médias destiné à être mis en signet et identifier les informations horaires qui indiquent le début et la fin du segment au sein du programme de médias.

5. Procédé selon la revendication 2 ou 3, les données relatives au signal acoustique comprenant des échantillons du signal acoustique, et comprenant en outre l'utilisation d'un module d'empreintes (101) pour comparer les échantillons du signal acoustique capturés par le dispositif d'utilisateur avec les modèles audio stockés du contenu médias connu, et pour présenter des données au module de désambiguïsation lequel identifie le contenu médias qui est susceptible de concorder avec les signaux acoustiques capturés par le dispositif d'utilisateur.

6. Procédé selon l'une quelconque des revendications 2 à 5, comprenant en outre la réception, au niveau du dispositif d'utilisateur (21), d'une saisie d'utilisateur relative au segment de contenu destiné à être mis en signet en vue d'une inclusion dans le signet, et de préférence la saisie d'utilisateur comportant un ou plusieurs des éléments suivants, à savoir : une annotation textuelle, audio ou visuelle, et le signet incluant l'annotation saisie par l'utilisateur.

7. Dispositif d'utilisateur (21) comprenant :
une interface utilisateur (29, 31) ;
un microphone (23) ; et
un module de mise en signet (69) exploitable de façon à : i) recevoir une saisie amorcée par l'utilisateur indiquant un souhait de mettre en signet un segment d'un programme de médias qui est en train d'être lu par un module de lecture (15) ; ii) obtenir des données relatives à des signaux acoustiques capturés à partir du microphone (23) ; et iii) envoyer à un module de désambiguïsation (89) les données relatives aux signaux acoustiques ; et iv) publier des données de signet générées par le module de désambiguïsation (89) sur un serveur de réseautage social (45) afin de partager le contenu mis en signet avec d'autres utilisateurs, cas dans lequel les données du signet comportent un identifiant de contenu qui identifie le programme de médias contenant le segment destiné à être mis en signet, et des informations horaires indiquant un début et une fin du segment au sein du programme de médias pour permettre la reproduction du segment du programme de médias par opposition au programme tout entier.

8. Dispositif d'utilisateur selon la revendication 7, exploitable de façon à présenter à l'utilisateur des options d'utilisateur générées par le module de désambiguïsation (89) en vue d'une sélection par l'utilisateur, et de préférence le dispositif d'utilisateur (21) étant exploitable de façon à envoyer une sélection d'utilisateur d'une option d'utilisateur au module de désambiguïsation (89) en vue d'une utilisation pour désambiguïser l'identité du segment de médias destiné à être mis en signet.

9. Dispositif d'utilisateur selon la revendication 7 ou 8, exploitable de façon à traiter les signaux acoustiques capturés afin d'extraire un code qui est intégré au sein du signal acoustique ; et les données relatives aux signaux acoustiques comprenant le code extrait et de préférence le code incluant un identifiant de canal et un code horaire ; ou les données relatives au signal acoustique comprenant des échantillons du signal acoustique.

10. Dispositif d'utilisateur selon l'une quelconque des revendications 7 à 9, le module de mise en signet (69) étant exploitable de façon à recevoir une saisie d'utilisateur relative au segment de médias destiné à être mis en signet en vue d'une inclusion dans le signet, et de préférence la saisie d'utilisateur comportant un ou plusieurs des éléments suivants, à savoir : une annotation textuelle, audio ou visuelle, et le signet incluant l'annotation saisie par l'utilisateur.

11. Module de désambiguïsation (89) pour désambiguïser un contenu destiné à être mis en signet par un utilisateur, le module de désambiguïsation (89) étant exploitable de façon à : i) traiter des données relatives à des signaux acoustiques capturés par un dispositif d'utilisateur, pour identifier un segment d'un programme de médias que l'utilisateur souhaite mettre en signet, et identifier des informations horaires indiquant un début et une fin du segment au sein du programme de médias ; ii) générer des données de signet pour le segment du programme de médias incluant un identifiant de contenu lequel identifie le programme de médias contenant le segment destiné à être mis en signet et les informations horaires indiquant le début et la fin du segment au sein du programme de médias pour permettre la reproduction du segment du programme de médias par opposition au programme tout entier, et iii) publier les données de signet sur un serveur de réseautage social (45) afin de partager le contenu mis en signet avec d'autres utilisateurs.

12. Module selon la revendication 11, le module de désambiguïsation (89) étant exploitable de façon à traiter les données relatives à des signaux acoustiques pour générer des options d'utilisateur, et étant exploitable de façon à présenter les options d'utilisateur au dispositif d'utilisateur.

13. Module selon la revendication 12, exploitable de façon à recevoir une sélection d'utilisateur d'une option d'utilisateur en provenance du dispositif d'utilisateur (21), et à employer l'option sélectionnée pour désambiguïser l'identité du segment audio destiné à être mis en signet.

14. Produit d'instructions aptes à être mises en oeuvre sur un ordinateur comprenant des instructions aptes à être mises en oeuvre sur un ordinateur pour faire en sorte qu'un dispositif informatique programmable soit configuré de façon à jouer le rôle de dispositif d'utilisateur selon l'une quelconque des revendications 7 à 10, ou soit configuré de façon à jouer le rôle de module de désambiguïsation selon l'une quelconque des revendications 11 à 13.
